# EUROPEAN PATENT APPLICATION

(11) **EP 1 806 064 A1**
(43) Date of publication of application: **11.07.2007**
(21) Application number: 05783302.2
(22) Date of filing: 16.09.2005
(51) Int. Cl.: A45D 44/22, A61C 7/00

(54) **MOUTHPIECE FOR FLATTENING WRINKLES**

(30) Priority: 16.09.2004 JP 2004269264; 08.11.2004 JP 2004324224
(71) Applicant: Showa Yakuhin Kako Co., Ltd, Tokyo 104-0031 (JP)
(72) Inventor: KUBO, Kazumi, 1500033 (JP); DOI, Shusuke, Showa Yakuhin Kako Co., Ltd., Tokyo 1040031 (JP); ONO, Kazuhiro, Showa Yykuhin Kako Co., Ltd., Tokyo 1040031 (JP)
(74) Representative: polypatent
(86) International application number: PCT/JP2005/017118
(87) International publication number: WO 2006/030886

(57) **Abstract**

A problem to be solved by the present invention is to provide a cheek enhancement piece which can be used casually and low-priced with a cosmetic consciousness similarly to false claws, false eyelashes, and the like, and moreover, adjustable by a person to be fit to own oral vestibule. The present invention provides A cheek enhancement piece, which is **characterized by** being composed of synthetic resin having flexibility, rubber elasticity, and shape retaining properties at normal temperature, and at the same time, being not deformed by human body temperatures, and capable of being freely formed at heating time, and provided with a length from a person's left molar tooth position reaching to the right molar tooth position and a vertical dimension (width) lower than the height of the gum in the oral vestibule, wherein, in the oral vestibule, at the positional portion opposed by the gum and the cheek mucous membrane and the positional portion opposed by the gum of the front teeth place and the lip mucous membrane, those portions are projected to the cheek mucous membrane side arid the lip mucous membrane side, thereby making a lengthwise dimension (thickness) large, and at the same time, at the positional portion opposed by the gum at the canine tooth place and the lip mucous membrane, the lengthwise dimension is reduced, and further, the unevenness and contour in the entirety are made continuous by a smooth curve and formed.

## Description

### TECHNICAL FIELD

The present invention relates to a wrinkle-smoothing mouthpiece, and more particularly to a wrinkle-smoothing mouthpiece that is attached inside the mouth so as to make the cheeks of the wearer, such as a senior citizen or a sick person with hollowed-out cheeks, appear full. Further, the present invention relates to a kind of a mouthpiece that is attached inside the mouth and allows a face to be physically pushed out from the inside for cosmetic shaping.

### BACKGROUND ART

In order to smooth out wrinkles that have developed at the mouth, silicon has conventionally been embedded in the tissue in an invasive manner, for example. However, such surgery takes a long time and is associated with post-operational pains. In addition, surgical scars tend to remain. Thus, surgery has imposed significant burdens on patients. In order to overcome these problems, methods have been proposed that utilize a mouthpiece made of food-purpose gel materials, such as gelatin or agar, silicon rubber, synthetic resin, and the like. No such mouthpieces have been sufficiently practical, and none of them have been commercially exploited.

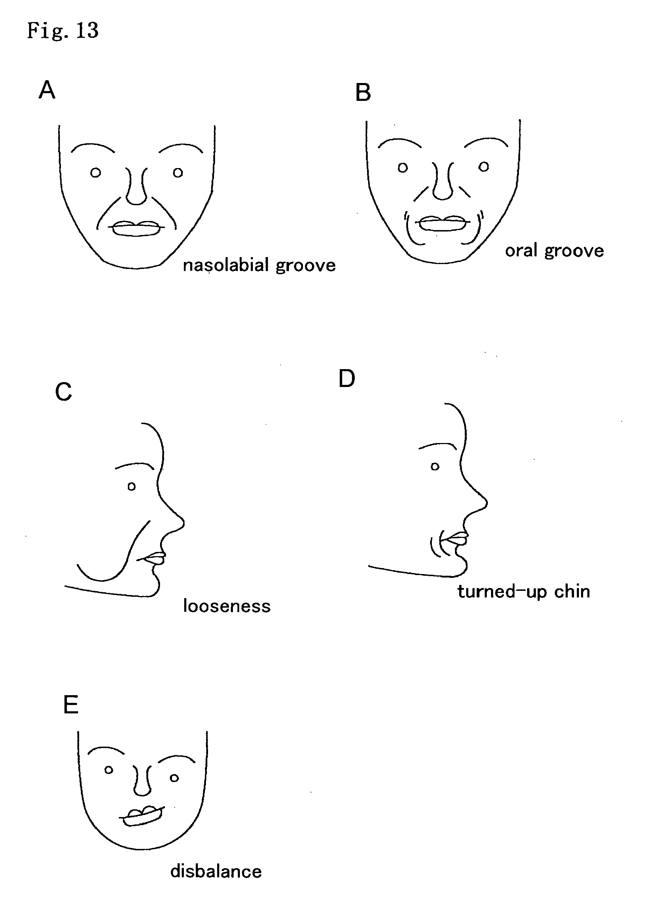

A transfiguration of the face attributable to the sagging and wrinkles of skin with age is reminiscent of old age. Its typical example, as shown in A to D of Fig. 13, is the drooping of a nasolabial groove, oral groove, and flesh of the cheeks or a turned-up chin. Further, as shown in Fig. 13E, there are some cases where a facial appearance ends up changing due to an accident and surgery. Such a facial appearance is unpleasant to a person, so it is only human that one should wish to enjoy a perpetual youth or go back to the former appearance. Further, accompanied with the expansion of economic affluence, the beauty consciousness is heightened, and a desire to condition a person's facial appearance has come to be strengthened.

The drooping of nasolabial groove, oral groove, and flesh of the cheeks or a turned up chin can be alleviated by physically raising up and pushing out fleshes of the cheeks or lips. For this reason, a variety of mouthpieces or quasi-mouthpiece products have been developed.

Incidentally, in the case of the Europeans, the sagging skin and wrinkles often deeply appear on the upper jaw portion also, and there are many cases where the mouthpiece for conditioning the facial appearance is attached to both of the upper and lower oral vestibules. However, in the case of the Orientals, it is often sufficient to attach the mouthpiece to the oral vestibule of the lower side only.

JP Utility Model Publication (Kokai) No. 5-51210U (1993) discloses a facial shaping device for allowing the face to look young at first glance, which is inserted between an upper lip and a teethridge and allows the nasolabial groove to be raised up. JP Utility Model Publication (Kokai) No. 5-26011U (1993) discloses a wrinkle-smoothing mouthpiece composed of a plastic material such as rubber, which is attached to the outside of the teethridge and capable of smoothing the wrinkles at the lips. JP Utility Model Publication (Kokai) No. 4-36918U (1992) discloses a facial configuration reforming device, which provides protruding portions at both sides of a retainer and shields the protruding portions by synthetic resin. JP Utility Model Publication (Kokai) No. 2-112213U (1990) discloses a cheek enhancement device with a hook piece to be hung, fitted on teeth. International Publication No. WO2004/056261 discloses an artificial dental prosthesis for cosmetic use.

### DISCLOSURE OF THE INVENTION

### PROBLEMS TO BE SOLVED BY THE INVENTION

Any of the technical ideas of the above described conventional arts intends to push out lips or flesh of the cheeks by attaching a mouthpiece or a quasi-mouthpiece member to an isolated portion (oral vestibule) between a gum and cheek mucous membrane or lip mucous membrane, thereby to smooth the wrinkles and condition the facial appearance. However, since any of these devices is hard in the shape, this makes the adjustment difficult. Hence, the user either must search for a ready made product matching the structure of own oral vestibule or sends away for a special order item which is made to order. In reality, there are many cases where the user cannot help visiting a dental office to place a special order. Further, there are great differences between individuals in the wrinkles and sagging skin, and until an appropriate mouthpiece (referred to as cheek enhancement piece) is obtained, a lot of times must be carried out for a revision of the mouthpiece. Hence, the cheek enhancement piece becomes an expensive item. Further, similarly to the facial configuration reforming device of JP Utility Model Publication (Kokai) No. 4-36918U (1992), something hard is felt, and similarly to JP Utility Model Publication (Kokai) No. 2-112213U (1990), a feeling of strangeness arises in the mouth when a hooking device remains inside, and it takes time to get used to them.

A problem to be solved by the present invention is to overcome the aforementioned problems presented by the background art. Namely, it is an object of the invention to provide a mouthpiece capable of smoothing out wrinkles at the mouth without surgery or imposition of excessive burdens on the patient. A problem to be solved by the present invention is further to provide a cheek enhancement piece which can be used casually and low-priced with a cosmetic consciousness similarly to false claws, false eyelashes, and the like, and moreover, adjustable by a person to be fit to own oral vestibule.

### MEANS FOR SOLVING THE PROBLEMS

After extensive research and analysis, the inventors have succeeded in constructing a practical, durable, and safe wrinkle-smoothing mouthpiece that utilizes a combination of a gold alloy and a denture base resin used in dental laboratory technology.

Namely, the first aspect of the present invention provides a wrinkle-smoothing mouthpiece which comprises: a member 4 attached between the right cheek flesh and the right row of teeth; a member 5 attached between the jaw flesh and the front row of teeth; and a member 6 attached between the left cheek flesh and the left row of teeth. The members 4, 5, and 6 are integrally connected by a connecting member 2. The member 4 and the member 6 are provided with fixing members 1 and 3, respectively, for fixing the members 4 and 6 to the interior of the mouth.

Preferably, a central portion of the connecting member 2 penetrates the member 5. One end of the connecting member is inserted in the member 4 while the other end is inserted in the member 6.

Preferably, the connecting member 2 comprises a ring-shaped member or a plate-shaped member.

Preferably, one end of the fixing members 1 and 3 is inserted in the members 4 and 6, respectively. The other end is shaped such that they can be each fixed to the back teeth.

Preferably, the members 4, 5, and 6 are made of dental resin.

Preferably, the connecting member 2 and the fixing members 1 and 3 are made of gold or a gold alloy.

Further, according to the second aspect of the present invention, the cheek enhancement piece of the present invention is provided with an orthodontic basic shape as described later, which can be modified and adjusted by aligning with the structure of the user's oral vestibule by the user (purchaser). That is, the cheek enhancement piece is provided with the orthodontic basic shape as a finished product, so that the adjustment of the shape by the user is least required.

That is, according to the second aspect of the present invention, the cheek enhancement piece is provided, which is characterized by being composed of synthetic resin having flexibility, rubber elasticity, and shape retaining properties at normal temperature, and at the same time, being not deformed by human body temperatures, and capable of being freely formed at heating time, and provided with a length from a person's left molar tooth position reaching to the right molar tooth position and a vertical dimension (width) lower than the height of the gum in the oral vestibule, wherein, in the oral vestibule, at the positional portion opposed by the gum and the cheek mucous membrane and the positional portion opposed by the gum of the front teeth place and the lip mucous membrane, those portions are projected to the cheek mucous membrane side and the lip mucous membrane side, thereby making a lengthwise dimension (thickness) large, and at the same time, at the positional portion opposed by the gum at the canine tooth place and the lip mucous membrane, the lengthwise dimension is reduced, and further, the unevenness and contour in the entirety are made continuous by a smooth curve and formed.

In the second aspect of the present invention, the lengthwise dimension of the positional portion opposed by the gum and the cheek mucous membrane is preferably made the largest, and in contrast to this, the lengthwise dimension of the positional portion opposed by the gum of the front teeth place and the lip mucous membrane is relatively made small.

In the second aspect of the present invention, the vertical dimension of the positional portion opposed by the gum of the cheek teeth side and the cheek mucous membrane is preferably made large, and the vertical dimension of the positional portion opposed by the gum of the front teeth and the lip mucous membrane is made small.

In the second aspect of the present invention, the width and thickness of the portion opposed by a frenulum labii and the gum are preferably less than or equal to those of the positional portion opposed by the gum of the canine tooth place and the lip mucous membrane.

In the second aspect of the present invention, the cheek enhancement piece preferably has a plurality of gum suction recess portions at the surface contacting the gum of the positional portion opposed by the gum and the cheek mucous membrane.

In the second aspect of the present invention, the synthetic resin used as a raw material is preferably EVA (ethylene-vinyl acetate copolymer) adjusting the content of vinyl acetate.

In the second aspect of the present invention, an overall length is preferably taken as 90 to 110 mm, and the maximum projecting place in the longitudinal direction is taken as the left and right position of 25 to 35 mm from the center, and the projecting dimension is taken as 7 to 13 mm.

### BEST MODE OF CARRYING OUT THE INVENTION

In the following, an embodiment of the invention will be described with reference to the drawings.

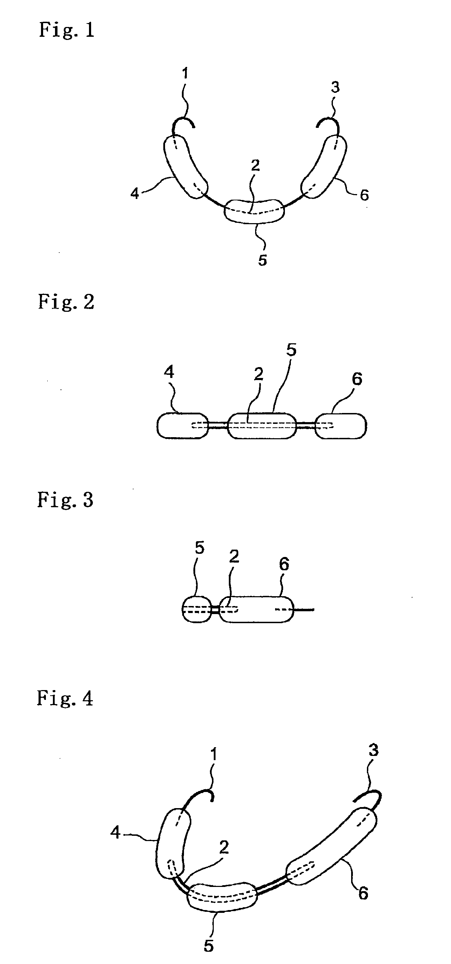

Fig. 1 shows a top view of a wrinkle-smoothing mouthpiece of the first aspect of the invention. Fig. 4 shows a perspective view of the wrinkle-smoothing mouthpiece of the first aspect of the invention. The mouthpiece of the invention includes: a member 4 attached between the right cheek flesh and the right row of teeth; a member 5 attached between the jaw flesh and the front row of teeth; and a member 6 attached between the left cheek flesh and the left row of teeth. The members 4, 5, and 6 may be attached either to the lower teeth or the upper teeth. Preferably, the members 4, 5, and 6 are made of dental resin. The dental resin used in the present invention may be either natural resin or synthetic resin; generally, acrylic resin is employed. Examples of acrylic resin include acrylate polymers and methacrylate polymers, of which the latter is preferable. Acrylic resin is preferable because it is a transparent material and can be freely colored; it is easy to process, tasteless, odorless, and non-toxic; and it has sufficient durability for everyday use. The members 4, 5, and 6 are preferably molded to have such a size and shape as to conform to the shape of individual teeth or the interior of the mouth of the wearer of the mouthpiece. Namely, the shape and size of the members 4, 5, and 6 are preferably determined on the basis of a mold prepared by the dentist for each user with his or her individual shape of teeth, cheeks, and the shape of his or her face when wearing the mouthpiece. For example, the members 4 and 6 may be of such a size as to fit on the molar (back teeth) portion at the right or left on the upper jaw or lower jaw.

The color of the members 4, 5, and 6 is not particularly limited; it may be transparent or colored (pink, blue, green, red, yellow, or any other desired color; pink is preferable from the viewpoint of making it similar to the flesh color of the interior of the mouth).

In the mouthpiece of the invention, the members 4, 5, and 6 are integrally connected by a connecting member 2. Fig. 2 shows a front view of the wrinkle-smoothing mouthpiece of the invention. As shown in Fig. 2, a central portion of the connecting member 2 penetrates the member 5. One end is inserted in the member 4, and the other end is inserted in the member 6. While Fig. 2 shows a case where the connecting member 2 is ring-shaped, the connecting member 2 may consist of a plate-like member.

Further, in the mouthpiece of the invention, the member 4 and the member 6 are provided with fixing members 1 and 3, respectively, for fixing each member to the interior of the mouth. As shown in Figs. 1 and 4, one end of the fixing members 1 and 3 is inserted in the members 4 and 6, respectively, while the other end is shaped such that they can be each fixed to the back teeth.

Regarding the material of the connecting member 2 and the fixing members 1 and 3, a metal used in dental laboratory technology may be used; preferably, it is gold or a gold alloy. As gold alloy, gold-platinum alloy may be used, for example.

Next, the cheek enhancement piece according to a second aspect of the present invention will be described.

A raw material of the cheek enhancement piece is taken as synthetic resin having flexibility, rubber elasticity, and shape retaining properties at normal temperature, and at the same time, being not deformed by human body temperatures, and capable of being freely formed at heating time. As a result, as described above, the user can adjust and modifies the shape best suited for himself or herself.

The length of the finished product is usually preferably a length from the left third molar tooth position of the normal people reaching to the right third molar tooth position. As a result, in the oral vestibule, the cheek enhancement piece can be disposed from the front teeth to both of the left and right sides up to the position of the third cheek tooth (the end edge position of the oral vestibule), and according to needs, in the region from the lip to the cheek, the necessary places can be pushed outward. However, the length of this cheek enhancement piece can be increased and decreased arbitrarily in the length between from the left molar tooth to the right molar tooth according to the needs of the user using it.

The vertical dimension (vertical width in the direction seeing the face from the front side) of the cheek enhancement piece is made lower than the height of the gum in the oral vestibule. As a result, when the mouth is opened or a big smile is made, the cheek enhancement piece can be least exposed.

The lengthwise dimension (thickness) of the cheek enhancement piece is made large in the oral vestibule such that at the positional portion opposed by the gum and the cheek mucous membrane and the positional portion opposed by the gum of the front teeth place and the lip mucous membrane, those portions are projected to the cheek mucous membrane side and the lip mucous membrane side. On the other hand, at the positional portion opposed by the gum of the canine tooth place and the lip mucous membrane, the lengthwise dimension is made small. Thus, by providing basic unevenness in advance, the adjusting amount of the shape by the user is reduced, and moreover, the adjustment is made easy since the place to be adjusted is aimed at in advance.

Incidentally, though the cheek enhancement piece has thus the unevenness in its entirety, the entire shape including the unevenness and contour is formed by a continuous smooth curve. Further, the cheek enhancement piece of the present invention can be used for either of the upper or lower oral vestibule, and according to needs, can be used for both of the upper and lower oral vestibules at the same time.

Further, when the lengthwise dimension (thickness) of the positional portion opposed by the gum and the cheek mucous membrane is made the largest, and in contrast to this, when the lengthwise dimension of the positional portion opposed by the gum of the front teeth place and the lip mucous membrane is made relatively small, this is most convenient.

Further, when the vertical dimension of the positional portion opposed by the gum at the cheek teeth side and the cheek mucous membrane is made large, and the vertical dimension of the positional portion opposed by the gum of the front teeth side and the lip mucous membrane is made smaller than this, the need standard of the revision by the user becomes small so as to improve the user-friendliness.

Further, at the center portion of the cheek enhancement piece, that is, at the portion opposed by the frenulum labii and the gum, the height (vertical width) and the lengthwise dimension (thickness) are made less than or equal to those of the positional portion opposed by the gum of a canine tooth place and the lip mucous membrane, so that a fitness sense of that portion can be improved in advance.

Further, a suction cup recess portion for sucking the gum is plurally provided on the surface contacting the gum of the portion opposed by the gum of the cheek enhancement piece and the cheek mucous membrane, so that the adherence of the cheek enhancement piece is improved owing to the effect of the soft gum mucous membrane and saliva, and the cheek enhancement piece is prevented from displacing during use.

As the material of the cheek enhancement piece according to the second aspect of the present invention, as long as it is a material having flexibility, rubber elasticity, and shape retaining properties at human body temperatures, and having plasticity at the temperatures (70 to 90°C) to the extent that the people is not burnt in fingers provided that the contact is for a short time, and moreover, posing no problems for safety, it can be used. A typical example is EVA resin (ethylene-vinyl acetate copolymer). This resin has flexibility, rubber elasticity, and shape retaining properties at normal temperatures by adjusting the content of vinyl acetate, and at the same time, is not deformed by the human body temperatures, and can be allowed to be freely formed at heating time. A resin having 25 to 40% addition of vinyl acetate can be used. Further, this resin is frequently used in the dental field, and is high in safety, and can be used with a safe conscience.

In general, though the length is taken as a length from a person's left third molar tooth position reaching to a right third molar tooth position, it may be shorter or longer than that owing to the conditions of the wrinkles and sagging of the skin depending on the individual. The vertical dimension (width) is made lower than the height of the gum in the oral vestibule. The lengthwise dimension (thickness) is made large such that, at the positional portion opposed by the gum and the cheek mucous membrane and the positional portion opposed by the gum of the front teeth place and the lip mucous membrane in the oral vestibule, those portions are projected to the cheek mucous membrane side and the lip mucous membrane side, so that the lengthwise dimension (thickness) is made large, and at the same time, at the positional portion opposed by the gum of the canine tooth place and the lip mucous membrane, the lengthwise dimension is made small. The projecting amount is the largest at the positional portion opposed by the gum and the cheek mucous membrane, and is relatively small at the positional portion opposed by the gum of the front teeth place and the lip mucous membrane.

The unevenness and contour in their entirety are made continuous by a smooth curve.

The center over all the directions in the cheek enhancement piece is preferably kept formed with a recess seated up and down for the frenulum labii.

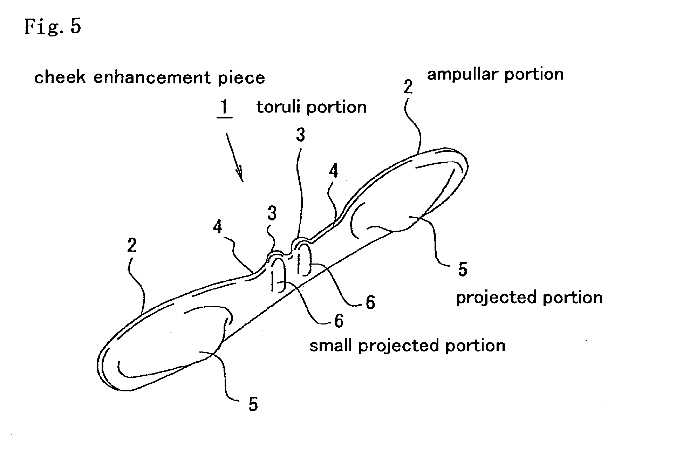

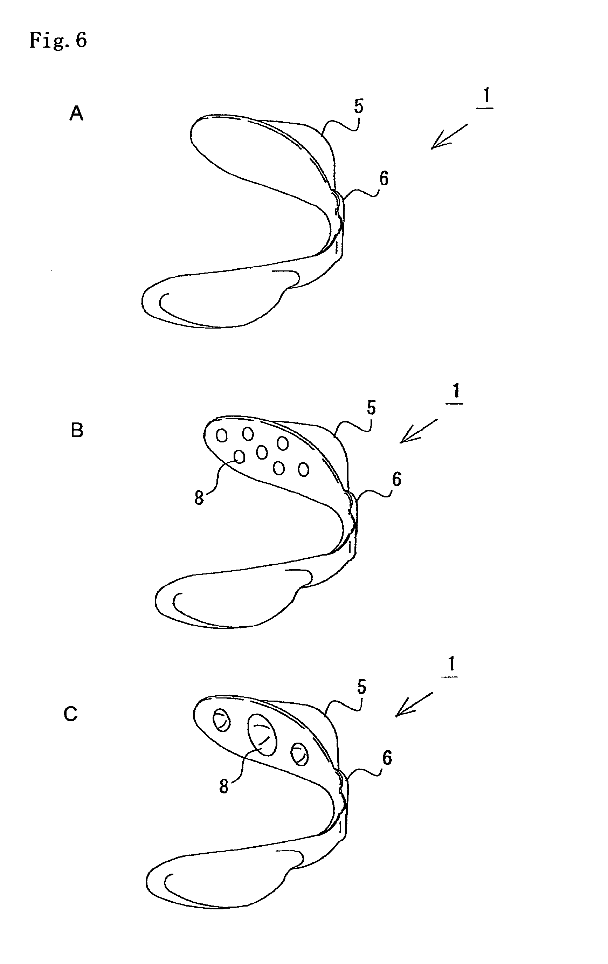

Figs. 5 and 6 show a cheek enhancement piece 1 formed by EVA resin (ULTRACEN #750 (product name) manufactured by Tosoh Corporation). This raw material is not deformed at human body temperatures, and can be freely formed at heating time of about 70°C, and is flexible and has rubber elasticity and shape retaining properties at normal temperatures.

The cheek enhancement piece 1, as shown in Fig. 5, is made into a finished product in a straight state in a longitudinal direction.

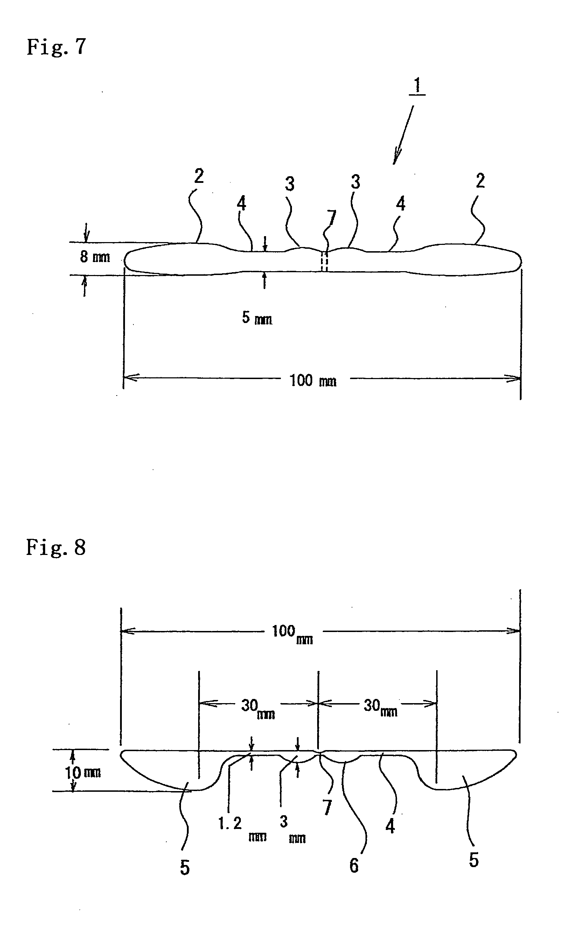

In a front view (Fig. 7), the cheek enhancement piece 1 displays a bilateral symmetry of a total length 100 mm, and has an ampullar portion 2 at the left and right, and a toruli portion 3 at the center. The vertical dimension (width) of the ampullar portion 2 is the maximum 8 mm, and the vertical dimension of the toruli portion 3 is the maximum 5 mm, and other zonal portions 4 are 5 mm in vertical dimension.

In a plan view (Fig. 8), the above described left and right ampullar portions 2 further project in front (to the lip side), and become a projected portion 5. The projected portion 5 is projected most at the position 30 mm from the center to both sides in the longitudinal direction of the cheek enhancement piece 1, and with this point as a center, it comes down to the end portion and the center side. The end portion side becomes gradual, and the center side becomes a steep decline. The lengthwise dimension (thickness) of the zonal portion 4 is about 1.2 mm. The toruli portion 3 becomes a small projected portion 6 projecting a little back and forth, and the lengthwise dimension of this portion is the maximum about 3 mm. At the midpoint of the left and right small projected portions 6 and 6, a recess portion 7 for the frenulum labii is formed up and down at the gum side. The contour of the entire cheek enhancement piece 1 and the projected portion 5 as well as the small projected portion 6, as shown in the figure, are all made continuous by a smooth curve.

Although the rear surface (gum side surface) of the cheek enhancement piece 1, as shown in Fig. 6(A), is made nearly flat, as shown in Figs. 6(B) and 6(C), the rear surface is sometimes kept formed with a plurality of suction cup recess portions 8. The suction cup recess portion 8, when the cheek enhancement piece 1 is attached, improves the adhesiveness of the cheek enhancement piece by the effect of the soft gum mucous membrane and saliva, and sucks the gum and prevents it from displacing during use.

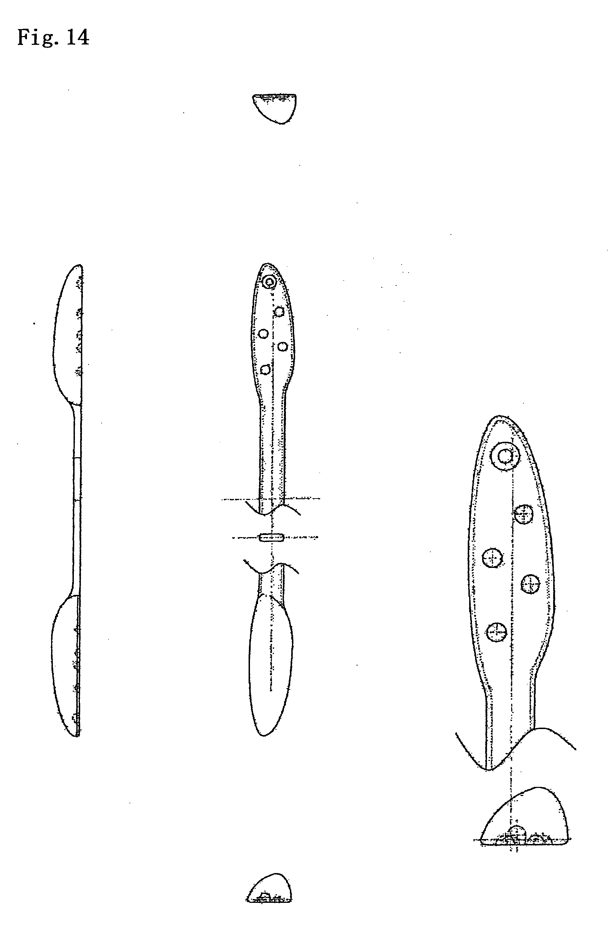

One example of the cheek enhancement piece according to the second aspect of the present invention will be shown in Fig. 14. Incidentally, the cheek enhancement piece shown in Fig. 14 is not provided with the small projected portion 6.

This cheek enhancement piece 1 is used as follows.

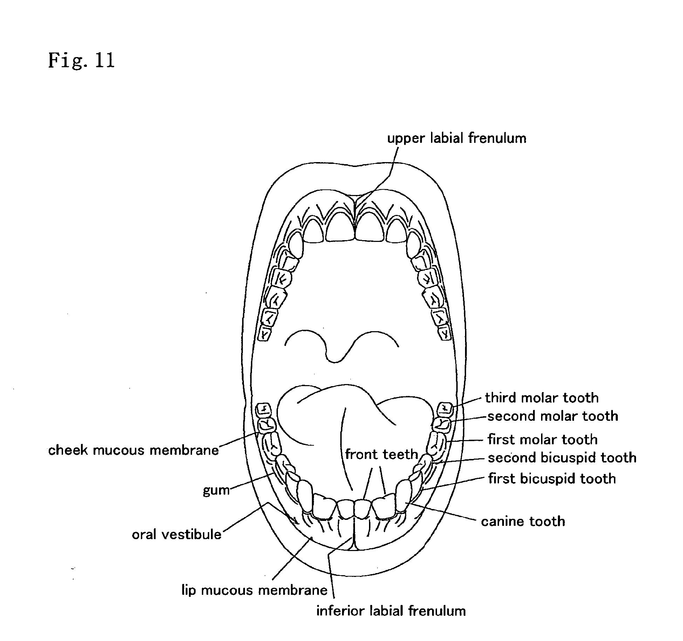

The cheek enhancement piece 1 of the finished product is curved, and fitted into the oral vestibule (Fig. 11) located between the cheek mucous membrane and the gum and between the lip mucous membrane and the gum so as to determine a degree of curvature of a person's gum and a size of outer edge. At this time, the left and right standards are set so that the recess portion 7 of the center of the cheek enhancement piece 1 comes to a position of the frenulum labii. Then, the cheek enhancement piece 1 is put into a hot water of 70 to 90°C, and the cheek enhancement piece 1 is formed by a hand twisting so as to be fit to the degree of the curvature and the size of the outer edge. While the adjustment of the length can be performed by increasing the thickness of the zonal portion 4 and the like, and if it is too long, the adjustment can be made by cutting off both ends by a scissor or the like.

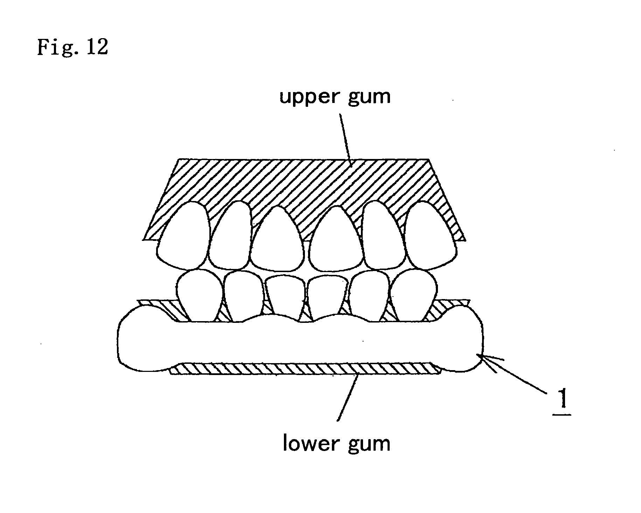

Next, a place colliding with a bulging portion of the gum is pushed out from the inner side of the curvature to the outside so as to be dented, and further at the same time, the upper edge of the cheek enhancement piece 1 in an attached state is formed and adjusted so as not to be upper than the upper edge of the gum (Fig. 12).

By repeating this operation several times, the cheek enhancement piece 1 fitted to the structure of a person's oral vestibule 7 is fabricated. Since this operation is an operation only to soften the cheek enhancement piece 1 by the hot water so as to adjust the shape, and then, apply it, anybody can do it simply.

The oral vestibule is dented at the root of the gum, and at the canine tooth place, the gum is projected in front to the large extent, and moreover, this shaping is necessary operation because of the individual differences and age differences.

Subsequently, the projected portion 5 is adjusted in the protruded amount and the maximum protruded position of the small projected portion 6, thereby to find a position in which a person's facial appearance is corrected, and its shape is fixed. When the projected amount of the projected portion 5 and the like is too large, this portion is pushed and crushed, or cut off.

By going through the above described operation, one's own cheek enhancement piece is completed. The rest is only to attach it into the oral vestibule as needed, and it will fit. The projected portion 5 pushes out the flesh of the cheeks toward the outside, and raises the drooped fleshes of the cheeks and the chin, and further, alleviates the nasolabial groove and the oral groove. Furthermore, the small projected portion 6 pushes out the lower lip toward the outside, and pulls back the turned-up chin or the like, so that the worrisome face appearance can be changed for the better.

In case the face appearance is unbalanced left and right, the pushing out the flesh of one-sided cheek by the projected portion 5 enables the drooped one-sided flesh to be raised, so that the face appearance can be changed for the better.

The aspect and the dimension as shown in the embodiment are examples. Since there are also individual differences in the size of mouth cavity, with respect to the length, vertical dimension and the like, the types of the mouthpiece in the varying degrees of large, intermediate, and small sizes are sometimes prepared. Further, since the individual differences are large in the degrees of requirement for the correction, the size of the projected portion and the entire lengthwise dimension as the cheek enhancement piece are preferably prepared in the varying degrees of large, intermediate, and small sizes.

Although the EVA resin is preferable as the raw material, needless to say, a raw material having the same properties and being harmless to the human body (for example, SEBS resin blended with liquid paraffin and polypropylene, and the like) can be adopted.

### EXAMPLES

### Example 1

In the following, an example of the manufacture of the wrinkle-smoothing mouthpiece of the first aspect of the invention is described.
(1) An impression (mold) of the interior of the mouth of the patient is acquired. An intraoral plaster model is prepared with plaster.
(2) Clasp portions (referenced at 1 and 3 in the drawings)
   Prepared by casting or bending a wire in comformity to the shape of the teeth.
(3) Front portion (referenced at 2 in the drawings)
   Prepared by casting or bending a wire in conformity with the roundness of the mouth.
(4) The members (referenced at 4, 5, and 6 in the drawings) for expanding the cheek are prepared with wax. The members are returned to the plaster model after the clasp portion and the front portion prepared above in (2) and (3) are attached thereto.
(5) The above plaster model of (4) is buried; after melting the wax away, resin is injected and caused to become polymerized.
(6) The mouthpiece thus fabricated in (5) is polished and adjusted so as to fit in the mouth of the patient.

### INDUSTRIAL APPLICABILITY

The first aspect of the present invention provides a practical, durable, and safe wrinkle-smoothing mouthpiece. The mouthpiece of the invention can be made relatively easily with a material safe to the human body. The mouthpiece of the first aspect of the invention is hard to break; when it becomes broken, it can be easily repaired. The mouthpiece of the invention can be made by an expert such as a dentist in such a shape as to conform to the shape of the teeth of the user and the shape of his or her face, so that the mouthpiece can be comfortably worn and used. The mouthpiece of the invention may be used by people generally who desire to maintain the appearance of their cheeks, such as senior citizens with hollowed-out cheeks, as well as actors and actresses.

Further, the cheek enhancement piece according to the second aspect of the present invention has a mode generally applicable to anybody, and therefore, there is no need for an individual special order. Hence, it can be mass-produced and provided at strictly lower prices, and therefore, can be used with easy cosmetic sense. Further, since the shape adjustment can be performed by the user until his or her satisfaction, the loading satisfaction is high.

### BRIEF DESCRIPTION OF THE DRAWINGS

Fig. 1 shows a top view of the wrinkle-smoothing mouthpiece of the invention.
Fig. 2 shows a front view of the wrinkle-smoothing mouthpiece of the invention.
Fig. 3 shows a side view of the wrinkle-smoothing mouthpiece of the invention.
Fig. 4 shows a perspective view of the wrinkle-smoothing mouthpiece of the invention.
Fig. 5 shows a perspective view (of the product).
Figs. 6(A), 6(B) and 6(C) show a perspective view (during use), respectively.
Fig. 7 shows a front view (of the product).
Fig. 8 shows a plan view (of the product).

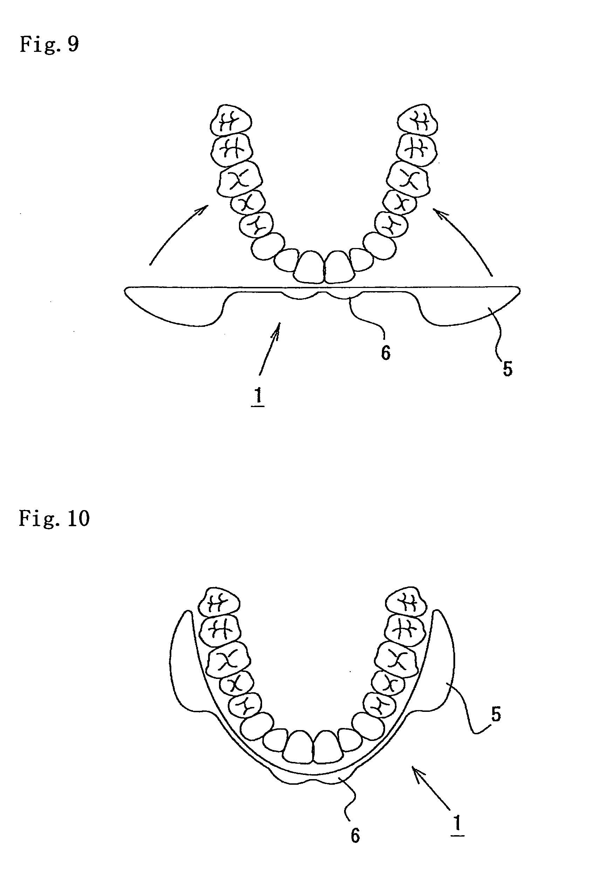

Fig. 9 shows a plan view 1 to explain a state of use.
Fig. 10 shows a plan view 2 to explain a state of use.
Fig. 11 shows an explanatory drawing of an attached place.
Fig. 12 shows an explanatory drawing to explain an attached state.
Figs. 13(A) to 13(E) show a schematic illustration for explaining a correction.
Fig. 14 shows one example of the product of the present invention.

## Claims

1. A wrinkle-smoothing mouthpiece which comprises: a member 4 attached between the right cheek flesh and the right row of teeth; a member 5 attached between the jaw flesh and the front row of teeth; and a member 6 attached between the left cheek flesh and the left row of teeth, wherein the members 4, 5, and 6 are integrally connected by a connecting member 2, and the member 4 and the member 6 are provided with fixing members 1 and 3, respectively, for fixing the members 4 and 6 to the interior of the mouth.

2. The wrinkle-smoothing mouthpiece of claim 1 wherein a central portion of the connecting member 2 penetrates the member 5, and one end of the connecting member is inserted in the member 4 while the other end is inserted in the member 6.

3. The wrinkle-smoothing mouthpiece of claim 1 or 2 wherein the connecting member 2 comprises a ring-shaped member

4. The wrinkle-smoothing mouthpiece of claim 1 or 2 wherein the connecting member 2 comprises a plate-shaped member.

5. The wrinkle-smoothing mouthpiece of any of claims 1 to 4 wherein one end of the fixing members 1 and 3 is inserted in the members 4 and 6, respectively, and the other end is shaped such that they can be each fixed to the back teeth.

6. The wrinkle-smoothing mouthpiece of any of claims 1 to 5 wherein the members 4, 5, and 6 are made of dental resin.

7. The wrinkle-smoothing mouthpiece of any of claims 1 to 6 wherein the connecting member 2 and the fixing members 1 and 3 are made of gold or a gold alloy.

8. A cheek enhancement piece, which is **characterized by** being composed of synthetic resin having flexibility, rubber elasticity, and shape retaining properties at normal temperature, and at the same time, being not deformed by human body temperatures, and capable of being freely formed at heating time, and provided with a length from a person's left molar tooth position reaching to the right molar tooth position and a vertical dimension (width) lower than the height of the gum in the oral vestibule, wherein, in the oral vestibule, at the positional portion opposed by the gum and the cheek mucous membrane and the positional portion opposed by the gum of the front teeth place and the lip mucous membrane, those portions are projected to the cheek mucous membrane side and the lip mucous membrane side, thereby making a lengthwise dimension (thickness) large, and at the same time, at the positional portion opposed by the gum at the canine tooth place and the lip mucous membrane, the lengthwise dimension is reduced, and further, the unevenness and contour in the entirety are made continuous by a smooth curve and formed.

9. The cheek enhancement piece of claim 8 wherein the lengthwise dimension of the positional portion opposed by the gum and the cheek mucous membrane is made the largest, and in contrast to this, the lengthwise dimension of the positional portion opposed by the gum of the front teeth place and the lip mucous membrane is relatively made small.

10. The cheek enhancement piece of claim 8 or 9 wherein the vertical dimension of the positional portion opposed by the gum of the cheek teeth side and the cheek mucous membrane is made large, and the vertical dimension of the positional portion opposed by the gum of the front teeth and the lip mucous membrane is made small.

11. The cheek enhancement piece of any of claims 8 to 10 wherein the width and thickness of the portion opposed by a frenulum labii and the gum are less than or equal to those of the positional portion opposed by the gum of the canine tooth place and the lip mucous membrane.

12. The cheek enhancement piece of any of claims 8 to 11 which has a plurality of gum suction recess portions at the surface contacting the gum of the positional portion opposed by the gum and the cheek mucous membrane.

13. The cheek enhancement piece of any of claims 8 to 12 wherein the synthetic resin used as a raw material is EVA (ethylene-vinyl acetate copolymer) adjusting the content of vinyl acetate.

14. The cheek enhancement piece of any of claims 8 to 13 wherein an overall length is taken as 50 to 150 mm, and the maximum projecting place in the longitudinal direction is taken as the left and right position of 10 to 50 mm from the center, and the projecting dimension is taken as 5 to 15 mm.
